# EUROPEAN PATENT APPLICATION

(11) **EP 4 102 097 A1**
(43) Date of publication of application: **14.12.2022**
(21) Application number: 22177896.2
(22) Date of filing: 08.06.2022
(51) Int. Cl.: F16F 9/30

(54) **CONSTRAINED-LAYER DAMPING ELEMENT**

(30) Priority: 11.06.2021 NL 2028432
(71) Applicant: 4Silence B.V., 7524 PK Enschede (NL)
(72) Inventor: Wijnant, Ysbrand Hans, 7548 PH Enschede (NL)
(74) Representative: 't Jong, Bastiaan Jacob

(57) **Abstract**

The invention relates to a constrained-layer damping element [1] comprising a layer of viscoelastic material [3] and a constraining layer [4] arranged thereon, and having a greater stiffness than the layer of viscoelastic material [3],
and magnet means [7, 8] arranged on the constraining layer [4] for the purpose of attaching the constrained-layer damping element [1] to a magnetizable surface [2], wherein the layer of viscoelastic material [3] lies against the magnetizable surface [2].

## Description

The invention relates to a constrained-layer damping element comprising a layer of viscoelastic material and a constraining layer arranged thereon and having a greater stiffness than the layer of viscoelastic material.

Constrained-layer damping elements are known and are also referred to in the field as CLD elements. The CLD elements are usually adhered to a surface the vibration of which must be damped. The CLD element is arranged with the layer of viscoelastic material against the surface and the layer of viscoelastic material then absorbs the vibrations in the surface. Because a constraining layer, such as a steel plate, aluminium plate, composite plate, for instance carbon composite plate, is arranged on the layer of viscoelastic material, it is ensured that the layer of viscoelastic material is under shear load to greater extent due to the vibrations, whereby an improved damping takes place.

In order to ensure that a CLD element is able to perform its damping function it is required that there be no direct connection between the vibrating surface and the constraining layer and that viscoelastic material be present between and adhered to the vibrating surface and the constraining layer at all times. It is therefore usual to glue a CLD element onto the vibrating surface. It is also known to glue the CLD element onto a base plate, so that the base plate can be attached to the vibrating surface. In such a construction a layer of viscoelastic material is also still present between the vibrating surface and the constraining layer.

The mass (thickness) of the constraining layer depends on the mass (thickness) of the construction to be damped. In the case of large structures, such as for instance a road bridge, the constraining layer must have a great mass (thickness) in order to be able to damp the vibrations and thereby the noise production of the road bridge. In the case of such great masses of the constraining layer the forces on the layer of viscoelastic material are likewise great, and consequently so are those on the adhesive layer with which the layer of viscoelastic material is usually attached to a vibrating surface.

These relatively great forces increase the risk of the adhesive layer coming loose over time. In view of the fact that the CLD element will thereby be less effective, the danger of the relatively heavy constraining layer, such as an aluminium plate or steel plate, coming loose also increases. When applied on a road bridge, this may result in dangerous situations.

It is therefore an object of the invention to reduce or even obviate the above stated drawbacks.

This object is achieved according to the invention with a constrained-layer damping element which is characterized by magnet means arranged on the constraining layer for the purpose of attaching the constrained-layer damping element to a magnetizable surface, wherein the layer of viscoelastic material lies against the magnetizable surface.

The magnet means cause the layer of viscoelastic material to be pressed and held down between the constraining layer and the magnetizable surface, whereby the attachment of the constrained-layer damping element is no longer dependent on an adhesive layer which adheres the layer of viscoelastic material to a vibrating surface. With the magnet means it is moreover prevented that the constraining layer comes loose, in that they will always urge the constraining layer toward the surface on which the constrained-layer damping element is arranged.

In a preferred embodiment of the constrained-layer damping element according to the invention the magnet means comprise at least one permanent magnet, which at least one permanent magnet preferably protrudes at least partially into an opening in the constraining layer.

Because the at least one permanent magnet protrudes into an opening in the constraining layer, the distance of the at least one permanent magnet to the magnetizable surface is reduced. This increases the attractive force of the at least one permanent magnet.

In addition, the magnetic field of the at least one permanent magnet will be affected less by the constraining layer, particularly in the case that the constraining layer is made of a ferromagnetic material.

Having the permanent magnet reach to the layer of viscoelastic material minimizes the distance to the magnetizable surface, and also minimizes the influence of the constraining layer.

The at least one permanent magnet is preferably slidable parallel to the constraining layer. Owing to the slideability of the at least one permanent magnet, the interaction between the constraining layer and the layer of viscoelastic material is affected less, this enhancing the vibration absorption capacity.

In a further preferred embodiment of the constrained-layer damping element according to the invention the at least one permanent magnet comprises a flange which lies around the opening and against the constraining layer.

Owing to the flange, a permanent magnet can be placed in an opening in the constraining layer in simple manner, wherein the flange provides for a force transmission from the magnet to the constraining layer and also ensures that the permanent magnet is held at the correct depth in the opening and thereby at the correct distance to the layer of viscoelastic material.

In another preferred embodiment of the constrained-layer damping element according to the invention the constraining layer comprises a permanent magnet layer.

With this embodiment the constrained-layer damping element according to the invention can be adhered against a magnetizable surface in simple manner as a result of the magnetic field of the constraining layer. The constraining layer can consist wholly of a permanent magnet layer, but can also be composed of a permanent magnet layer and a layer of a different material.

In yet another embodiment of the constrained-layer damping element according to the invention an adhesive layer is arranged on the layer of viscoelastic material for the purpose of adhesion to the magnetizable surface.

The adhesive layer provides for an additional attachment of the constrained-layer damping layer according to the invention. In addition, the adhesive layer provides for an improved transmission of the vibrations from the magnetizable surface to the constrained-layer damping element.

The invention further relates to a combination of a constrained-layer damping element according to the invention and a magnetizable surface, wherein the constrained-layer damping element lies with the layer of viscoelastic material against the magnetizable surface and wherein the magnet means urge the constraining layer toward the magnetizable surface.

These and other features according to the invention are further elucidated with reference to the accompanying drawings.
Figure 1 shows a schematic cross-sectional view of a first embodiment of a constrained-layer damping element according to the invention.
Figure 2 shows a schematic cross-sectional view of a second embodiment of a constrained-layer damping element according to the invention.

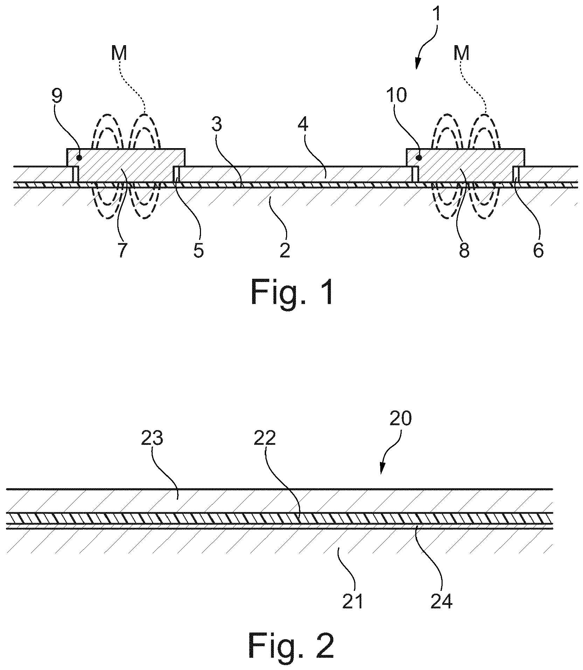

Figure 1 shows a first embodiment 1 of a constrained-layer damping element. The damping element 1 is arranged on a magnetizable surface 2. Damping element 1 has a layer of viscoelastic material 3 with thereon a constraining layer 4 which is for instance made of aluminium, steel or a composite material, such as carbon fibre or glass fibre.

Arranged in constraining layer 4 are two openings 5, 6, into each of which protrudes a permanent magnet 7, 8. Both permanent magnets 7, 8 are provided with a flange 9, 10. The magnetic force caused by the magnetic field M of the permanent magnet 7, 8 is transmitted by these flanges 9, 10 to the constraining layer 4, whereby the constraining layer 4 presses the layer of viscoelastic material 3 against the magnetizable surface.

Figure 2 shows a second embodiment of a constrained-layer damping element 20. This damping element 20 is arranged on a magnetizable surface 21. The damping element 20 has a layer of viscoelastic material 22 with thereon a constraining layer 23 embodied as permanent magnet.

Further arranged on the layer of viscoelastic material 22 opposite the constraining layer 23 is an adhesive layer 24, which is in direct contact with the magnetizable surface 21.

The constraining layer 23 embodied as permanent magnet will press the layer of viscoelastic material 22 against the magnetizable surface 21. The adhesive layer 24 will here provide for an additional attachment of the constrained-layer damping element 20 to the surface 21, but also for an improved transmission of the vibrations from surface 21 to the layer of viscoelastic material 22.

## Claims

1. Constrained-layer damping element comprising a layer of viscoelastic material and a constraining layer arranged thereon, and having a greater stiffness than the layer of viscoelastic material,
**characterized by**
magnet means arranged on the constraining layer for the purpose of attaching the constrained-layer damping element to a magnetizable surface, wherein the layer of viscoelastic material lies against the magnetizable surface.

2. Constrained-layer damping element according to claim 1, wherein the magnet means comprise at least one permanent magnet, which at least one permanent magnet preferably protrudes at least partially into an opening in the constraining layer.

3. Constrained-layer damping element according to claim 2, wherein the at least one permanent magnet is slidable parallel to the constraining layer.

4. Constrained-layer damping element according to claim 2 or 3, wherein the at least one permanent magnet comprises a flange which lies around the opening and against the constraining layer.

5. Constrained-layer damping element according to claim 1, wherein the constraining layer comprises a permanent magnet.

6. Constrained-layer damping element according to any one of the foregoing claims, wherein an adhesive layer is arranged on the layer of viscoelastic material for the purpose of adhesion to the magnetizable surface.

7. Combination of a constrained-layer damping element according to any one of the foregoing claims and a magnetizable surface, wherein the constrained-layer damping element lies with the layer of viscoelastic material against the magnetizable surface and wherein the magnet means urge the constraining layer toward the magnetizable surface.
